(19) Europäisches Patentamt
European Patent Office
Office européen des brevets

(11) **EP 1 157 968 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**21.01.2009  Patentblatt 2009/04**

(45) Hinweis auf die Patenterteilung:
**03.05.2006  Patentblatt 2006/18**

(21) Anmeldenummer: **01110816.4**

(22) Anmeldetag: **04.05.2001**

(51) Int Cl.:
***C01B 3/40*** *(2006.01)*

(54) **Verfahren zur autothermen, katalytischen Dampfreformierung von Kohlenwasserstoffen**

Process for the autothermal catalytic steam reforming of hydrocarbons

Procédé autothermique catalytique de réformage à la vapeur d' hydrocarbures

(84) Benannte Vertragsstaaten:
**AT BE CH CY DE DK ES FI FR GB GR IE IT LI LU MC NL PT SE TR**

(30) Priorität: **20.05.2000  DE 10025032**

(43) Veröffentlichungstag der Anmeldung:
**28.11.2001  Patentblatt 2001/48**

(73) Patentinhaber: **Umicore AG & Co. KG
63457 Hanau-Wolfgang (DE)**

(72) Erfinder:
 • **Ahlborn, Rainer
  63450 Hanau (DE)**
 • **Baumann, Frank, Dr.
  63755 Alzenau (DE)**
 • **Wieland, Stefan, Dr.
  63069 Offenbach (DE)**

(74) Vertreter: **Stellbrink, Axel et al
Vossius & Partner
Siebertstrasse 4
81675 München (DE)**

(56) Entgegenhaltungen:
EP-A- 0 112 613          WO- -00//48805
WO-A-99/48805          DE-A- 19 727 841
GB- - 2 274 284          US- - 4 522 894
US-A- 4 743 576          US-A- 4 755 498
US-A- 5 112 527

 • J.K. HOCHMUTT: 'Applied Catalysis B: Environmental', Bd. 1, 1992 Seiten 89 - 100

EP 1 157 968 B2

## Beschreibung

Die Erfindung betrifft ein Verfahren zur autothermen, katalytischen Dampfreformierung von Kohlenwasserstoffen durch Leiten eines auf eine Vorwärmtemperatur erwärmten Eduktgemisches aus den Kohlenwasserstoffen, Sauerstoff und Wasser oder Wasserdampf über einen Katalysator.

Für die Produktion von Wasserstoff können bekanntermaßen Kohlenwasserstoffe bei hohen Temperaturen in der Gegenwart von Wasserdampf an einem geeigneten Katalysator zu Wasserstoff, Kohlenmonoxid und Kohlendioxid umgesetzt werden. Die Reaktion ist stark endotherm und läuft zum Beispiel nach folgender Reaktionsgleichung ab:

$$C_8H_{18} + 8\,H_2O \rightleftarrows 8\,CO + 17\,H_2 \qquad \Delta H = +\,1250\ kJ/mol \qquad (1)$$

Charakteristisch für diese Reaktion ist das sogenannte Dampf/Kohlenstoff-Verhältnis S/C (Steam to Carbon ratio). In der Reaktionsgleichung (1) ist S/C gleich 1.

Eine weitere, bekannte Möglichkeit zur Erzeugung von Wasserstoff ist die katalytische, partielle Oxidation CPO (Catalytic Partial Oxidation). Hierbei werden die Kohlenwasserstoffe in Gegenwart von Sauerstoff an einem Katalysator zum Beispiel gemäß Reaktionsgleichung (2) zu Kohlenmonoxid und Wasserstoff umgesetzt. Eine wichtige Kenngröße für die partielle Oxidation ist die Luftzahl λ, die als Verhältnis aus eingesetzter Molanzahl Sauerstoff zu der für eine vollständige Oxidation benötigten Molanzahl Sauerstoff definiert ist (siehe Reaktionsgleichung (3)):

$$C_8H_{18} + 4\,O_2 \leftrightarrows 8\,CO + 9\,H_2 \qquad \lambda = 0{,}32\ \Delta H = -\,685\ kJ/mol \qquad (2)$$

$$C_8H_{18} + 12.5\,O_2 \rightleftarrows 8\,CO_2 + 9\,H_2O \qquad \lambda = 1\ \Delta H = -5102\ kJ/mol \qquad (3)$$

Die vorliegende Erfindung befasst sich mit einer weiteren Möglichkeit der Wasserstoffgewinnung, der sogenannten autothermen Dampfreformierung. Dieses Verfahren kombiniert die katalytische, partielle Oxidation mit der Dampfreformierung, wobei die exotherme, partielle Oxidation die notwendige Reaktionswärme für die nachfolgende endotherme Dampfreformierung liefert. Das Eduktgemisch kann hierbei auf eine Vorwärmtemperatur vorgewärmt werden. Das Produktgemisch befindet sich bei der am Reaktorausgang herrschenden Temperatur im thermodynamischen Gleichgewicht der Wassergas-Shift-Reaktion. Die autotherme Dampfreformierung verbindet die Vorteile der katalytischen, partiellen Oxidation (gutes Startverhalten) mit denen der Dampfreformierung (hohe Wasserstoffausbeuten).

Die US 4,415,484 offenbart einen Katalysator für die Verwendung in einem autothermen Reformierungsreaktor. Der Katalysator enthält 0,01 bis 6% Rhodium, sowie 10 bis 35% Calciumoxid auf einem Träger aus Aluminiumoxid, welches darüber hinaus mit etwa 3 bis 15 % Magnesium promotiert ist. Der Katalysator wird in Form von Pellets eingesetzt und zeichnet sich besonders durch eine geringe Neigung zur Verkokung bei niedrigen Sauerstoff/Kohlenstoff-Verhältnissen aus. Ein typisches Katalysatorsystem zur Durchführung der autothermen Reformierung enthält gemäß diesem Dokument auf etwa einem Drittel seiner Länge einen Eisenoxid-Katalysator für die partielle Oxidation und auf zwei Drittel seiner Länge den beschriebenen Rhodium-Katalysator.

Die WO 98/55227 beschreibt einen bifunktionalen Katalysator für die partielle Oxidation von Kohlenwasserstoffen. Er besitzt eine Dehydrieraktivität für die Dehydrierung der Kohlenwasserstoffe sowie die Fähigkeit, die Kohlenwasserstoffkette selektiv zu oxidieren. Die Dehydrieraktivität wird durch Metalle der achten Gruppe des Periodensystems zur Verfügung gestellt, während die selektive Oxidation durch ionisierten Sauerstoff erfolgt. Quelle für ionisierten Sauerstoff sind Oxide, die mit einer Fluoritstruktur oder einer Perovskitstruktur kristallisieren wie zum Beispiel Zirkonoxid, Ceroxid, Wismutoxid usw.. Ein bevorzugter Katalysator ist zum Beispiel Pt/CeGdO. Er wird in pelletierter Form mit Durchmessern von 1,125 bis 1,5 Zoll eingesetzt.

Die WO 99/48805 beschreibt ein Verfahren zur katalytischen Erzeugung von Wasserstoff durch eine selbstunterhaltende, partielle Oxidation und Dampfreformierung von Kohlenwasserstoffen, wobei eine Mischung aus den Kohlenwasserstoffen und einem Sauerstoff enthaltenden Gas und gegebenenfalls Dampf an einem Katalysator umgesetzt wird, der Rhodium auf einem Trägermaterial dispergiert enthält, welches als Kationen Cer und Zirkon enthält. Der Katalysator wird in granulierter Form eingesetzt.

Die DE 197 27 841 A1 beschreibt ein Verfahren und eine Vorrichtung zur autothermen Reformierung von Kohlenwasserstoffen, bei denen der Brennstoff über eine Zuführungseinrichtung einem zweistufigen Reformierreaktor zugeführt wird. Das entstehende Reformat wird in einem Wärmetauscher im Gegenstrom und in wärmetauschender Weise zu von außen nach innen geführten Ausgangsstoffen der Reformierung geleitet. Der über die Zuführungseinrichtung zugeführte Brennstoff wird mit dem Ausgangsstoff direkt auf die einen Katalysator aufweisenden Reaktionszone aufgebracht, in der die Verbrennung und Reformierung bzw. Katalyse durchgeführt wird. Der Reformierreaktor enthält in einem oberen Bereich einen mit Katalysator beschichteten Wabenkörper und in einem unteren Bereich eine mit Katalysator beschichtete Schüttung. Anstelle der Schüttung kann auch ein Wabenkörper verwendet werden.

Die autotherme Dampfreformierung erscheint als ein geeignetes Verfahren für die Wasserstofferzeugung an Bord eines mit Brennstoffzellen betriebenen Kraftfahrzeugs, da mit diesem Verfahren der für den Betrieb der Brennstoffzellen benötigte Wasserstoff aus den für konventionelle Verbrennungsmotoren verwendeten Kraftstoffen gewonnen werden kann. Von wesentlicher Bedeutung für dieses Einsatzgebiet ist die Wasserstoffproduktivität, die sowohl auf das Volumen des Katalysators, Gleichung (4), als auch auf die Masse des eingesetzten Edelmetalls, Gleichung (5), bezogen werden kann:

$$P_{Kat} = \frac{V_{H2}}{V_{Kat} \cdot t} \quad \left[\frac{Nm^3}{l_{Kat} \cdot h}\right] \tag{4}$$

$$P_{EM} = \frac{V_{H2}}{M_{EM} \cdot t} \cdot \left[\frac{Nm^3}{g_{EM} \cdot h}\right] \tag{5}$$

$P_{Kat}$: Wasserstoffproduktivität bezogen auf das Volumen $V_{Kat}$ des Katalysators
$P_{EM}$: Wasserstoffproduktivität bezogen auf die Masse des Edelmetalls
$V_{H2}$: Volumen des erzeugten Wasserstoffs unter Normalbedingungen
t: Zeit

Aufgabe der vorliegenden Erfindung ist es, ein Verfahren zur autothermen Dampfreformierung anzugeben, welches sich durch eine sehr hohe Wasserstoffproduktivität auszeichnet und damit sehr gut für den Einsatz in mobilen Systemen geeignet ist.

Diese Aufgabe wird gelöst durch ein Verfahren zur autothermen, katalytischen Dampfreformierung von Kohlenwasserstoffen durch Leiten eines auf eine Vorwärmtemperatur erwärmten Eduktgemisches aus den Kohlenwasserstoffen, Sauerstoff und Wasser oder Wasserdampf über einen Katalysator. Das Verfahren ist dadurch gekennzeichnet, dass es adiabatisch betrieben wird und der Katalysator auf einem Tragkörper eine Beschichtung aus einer Katalysatormasse aufweist, welche Rhodium in einer Konzentration von 0.1 bis 2 Gew.- %, bezogen auf ihr Gesamtgewicht auf einem oxidischen Trägermaterial aus der Gruppe Aluminiumoxid, Siliciumdioxid, Titandioxid oder Mischoxide hiervon und Zeolithe enthält und wobei die Katalysatormasse zusätzlich Platin in einem Gewichtsverhältnis von Rhodium zu Platin zwischen 20:1 bis 2:1 enthält.

Das Verfahren ist einstufig, das heißt das Eduktgemisch wird über einen einzigen Katalysator geleitet, der in der Lage ist, im Einlaufbereich des Katalysators durch katalytische, partielle Oxidation des Eduktgemisches die für die endotherme Dampfreformierung benötigte Energie bereitzustellen. Hierbei erhöht sich die Temperatur des Eduktgemisches von der Vorwärmtemperatur auf die notwendige Reaktionstemperatur zwischen 600 und 900° C. Partielle Oxidation und Dampfreformierung gehen hierbei gleitend ineinander über.

Der erfindungsgemäß zu verwendende Katalysator enthält auf einem Tragkörper eine Katalysatormasse, die in Form einer Beschichtung auf den geometrischen Oberflächen des Tragkörpers aufgebracht ist. Bevorzugte Tragkörper sind monolithische Wabenkörper aus Keramik oder Metall, offenzellige keramische oder metallische Schaumkörper, Metallbleche oder unregelmäßig geformte Bauteile. Die Dicke der katalytischen Beschichtung liegt in der Regel zwischen 20 und 100 μm.

Ein Vorteil dieser Katalysatoranordnung ist ihre relativ geringe Wärmekapazität. Außerdem ist die gesamte Katalysatormasse durch Ausbreitung in Form einer Schicht sehr gut für die Reaktanden zugänglich. Dies führt zu einer großen spezifischen Katalysatoraktivität und zu einer hohen Dynamik des Katalyseprozesses, das heißt das Verfahren kann den variierenden Anforderungen an die Wasserstoffproduktion im Kraftfahrzeug sehr schnell folgen. Wesentlich ist hierbei auch, dass der Prozess adiabatisch betrieben wird. Dem Katalyseprozess wird also keine Wärme durch Wärmeaustauscher entzogen, wie es zum Beispiel in dem Reaktor gemäß der DE 197 27 841 A1 der Fall ist. Das erfindungsgemäße Verfahren weist daher eine sehr kurze Anfahrzeit nach dem Kaltstart des Kraftfahrzeugs auf, da keine unnötigen Bauteile auf Betriebstemperatur erwärmt werden müssen.

Die Katalysatormasse enthält wenigstens Rhodium und Platin auf einem feinteiligen, oxidischen Trägermaterial. Bei der Katalysatormasse handelt es sich also um einen geträgerten Katalysator oder Trägerkatalysator. Der Begriff des Trägerkatalysators bezieht sich im Rahmen dieser Erfindung nur auf die Katalysatormasse und wird scharf von dem Katalysator unterschieden werden, der aus dem Tragkörper mit dem darauf in Form einer Beschichtung aufgebrachten Trägerkatalysator besteht.

Als oxidisches Trägermaterial für die Platingruppenmetalle kommen Oxide aus der Gruppe Aluminiumoxid, Siliciumdioxid, Titandioxid oder Mischoxide hiervon und Zeolithe in Frage. Bevorzugt werden Materialien mit einer spezifischen Oberfläche von mehr als $10 \, m^2/g$ eingesetzt, um eine möglichst hochdisperse Verteilung der katalytisch aktiven Komponenten auf dieser großen Oberfläche zu ermöglichen. Die Techniken zur Herstellung eines solchen Trägerkatalysators und zur Beschichtung eines inerten Tragkörpers damit sind dem Fachmann bekannt.

Zur thermischen Stabilisierung und als Promotoren kann die Katalysatormasse zusätzlich wenigstens ein Oxid ausgewählt aus der Gruppe Boroxid, Wismutoxid, Galliumoxid, Oxide der Alkalimetalle, Oxide der Erdalkalimetalle, Oxide der Nebengruppenelemente und Oxide der Seltenerdmetalle in einer Konzentration von bis zu 40 Gew.-%, bezogen auf das Gesamtgewicht der Katalysatormasse, enthalten.

Die Katalysatormasse enthält als Edelmetall 0,1 bis 2 Gew.-% Rhodium, bezogen auf ihr Gesamtgewicht. Rhodium weist eine hohe Aktivität für die Dampfreformierung auf, wobei gleichzeitig seine Oxidationsaktivität verglichen mit der von Platin gering ist. Hierdurch wird die partielle Oxidation des Eduktgemisches am Einlauf des Katalysators gedämpft und es werden hohe Temperaturspitzen vermieden, die den Katalysator zerstören könnten. Zur Anpassung der Oxidationsaktivität an die Erfordernisse des Prozesses enthält die Katalysatormasse noch Platin mit einem Gewichtsverhältnis von Rhodium zu Platin zwischen 20:1 und 2:1, bevorzugt 10:1 bis 3:1. Wichtig ist hierbei, dass der Gewichtsanteil von Platin geringer ist als der von Rhodium, um eine zu stürmische Oxidation am Einlauf des Katalysators zu vermeiden.

Bevorzugt wird eine Katalysatormasse verwendet, die Rhodium und Platin auf einem aktiven Aluminiumoxid enthält. Diese Katalysatormasse kann zusätzlich noch Ceroxid zur Verminderung von Rußablagerungen und zur Erhöhung der Schwefelresistenz enthalten.

Das Verfahren kann mit aliphatischen oder aromatischen Kohlenwasserstoffen oder Kohlenwasserstoffgemischen wie Benzin oder Dieselöl betrieben werden. Je nach verwendetem Kohlenwasserstoff kann mit Dampf/Kohlenstoff-Verhältnissen S/C zwischen 0,7 und 4 gearbeitet werden. Die Luftzahl λ des Eduktgemisches und seine Vorwärmtemperatur werden dabei so gewählt, dass sich am Ausgang des Katalysators eine Temperatur zwischen 600 und 900° C einstellt.

Das vorgeschlagene Verfahren stellt nur einen Teil eines Gesamtverfahrens zur Gewinnung von Wasserstoff an Bord eines mit Brennstoffzellen ausgerüsteten Kraftfahrzeugs dar. Das Gesamtverfahren umfasst neben der autothermen Reformierung noch Verfahrensstufen zur Entfernung von Kohlenmonoxid aus dem Reformat durch zum Beispiel ein oder mehrere Wassergas-Shift-Stufen. Außerdem enthält das Gesamtverfahren auch eine katalytische Verbrennung des Anodenabgases der Brennstoffzelle. Die Reaktion in den Wassergas-Shift-Stufen und die katalytische Verbrennung sind exotherm und liefern im Dauerbetrieb des Fahrzeugs die notwendige Wärmemenge zur Vorwärmung des Eduktgemisches auf eine geeignete Vorwärmtemperatur zwischen etwa 270 und 350° C.

Beim Kaltstart wird der Katalysator kurzzeitig mit einem Eduktgemisch betrieben, welches nur die Kohlenwasserstoffe und Luftsauerstoff enthält, um das Gesamtsystem durch eine katalytische, partielle Oxidation am Katalysator schnell auf Betriebstemperatur zu erwärmen. Nach Erreichen der Betriebstemperaturen wird zur autothermen Reformierung übergegangen, indem dem Eduktgemisch Wasserdampf zugefügt wird. Alternativ hierzu können die Betriebstemperaturen auch durch andere Vorheizmaßnahmen eingestellt werden.

## Vergleichsbeispiel 1:

Es wurde eine Mischung aus Isooktan und Toluol (jeweils 50 Gew.-%) nach dem erfindungsgemäßen Verfahren reformiert.

Bei dem im Verfahren eingesetzten Katalysator handelte es sich um einen katalytisch beschichteten keramischen Wabenkörper mit einer Zelldichte von 62 Zellen pro Quadratzentimeter und einem Volumen von 35 ml. Die katalytische Beschichtung bestand aus einem Rhodium/Aluminiumoxid-Trägerkatalysator und war in einer Konzentration von 150 Gramm pro Liter auf den Wabenkörper aufgebracht. Die Beschichtungskonzentration des Rhodiums betrug 1 g/l.

Zur Durchführung der autothermen Reformierung wurden die flüssigen Kohlenwasserstoffe verdampft. Anschließend wurden die verdampften Edukte sowie die benötigte Luft jeweils getrennt auf 350° C erhitzt und dann gemeinsam über den Katalysator geleitet, um ihn zunächst durch katalytische, partielle Oxidation auf seine Betriebstemperatur von etwa 600° C vorzuheizen. Nach Erreichen der Betriebstemperatur wurde der benötigte Wasserdampf dem Eduktgemisch zudosiert. Im stationären Betrieb wurde der Katalysator mit folgenden Stoffmengen belastet:

| Isooktan/Toluol: | 267 g/h |
|---|---|
| Wasser. | 526 g/h |
| Luft: | 908 N1/h |

Die Temperatur des den Katalysator verlassenden Produktgasgemisches lag zwischen 680 und 700° C.

Das Trockenreformat enthielt 36 Vol.-% Wasserstoff, 12,2 Vol.-% Kohlenmonoxid, 11,8 Vol.-% Kohlendioxid und 40 Vol.-% Stickstoff. Hieraus errechnet sich eine Wasserstoffproduktivität von $P_{Kat}$ = 39 Nm$^3$/lh, beziehungsweise $P_{EM}$ = 39 Nm$^3$/gh.

**Vergleichsbeispiel 2:**

Es wurde Isooktan nach dem erfindungsgemäßen Verfahren reformiert. Es wurde der selbe Katalysator und unter denselben Betriebsbedingungen wie in Vergleichsbeispiel 1 eingesetzt.

Im stationären Betrieb wurde der Katalysator mit folgenden Stoffmengen belastet:

| Isooktan: | 267 g/h |
|---|---|
| Wasser: | 509 g/h |
| Luft: | 981 Nl/h |

Die Temperatur des den Katalysator verlassenden Produktgasgemisches lag zwischen 680 und 700° C.

Das Trockenreformat enthielt 37 Vol.-% Wasserstoff, 12,0 Vol.-% Kohlenmonoxid, 9,4 Vol.-% Kohlendioxid und 40,6 Vol.-% Stickstoff. Hieraus errechnet sich eine Wasserstoffproduktivität von $P_{Kat}$ = 40 Nm$^3$/lh, beziehungsweise $P_{EM}$ = 40 Nm$^3$/gh.

Dagegen ergibt sich aus Beispiel 7 der WO 99/48805 unter der Annahme einer typischen Schüttdichte für das Katalysatorgranulat von 500 g/l nur eine Wasserstoffproduktivität von $P_{Kat}$ = 1,8 Nm$^3$/lh, beziehungsweise $P_{EM}$ = 3,6 Nm$^3$/gh.

Die Wasserstoffproduktivität des erfindungsgemäßen Verfahrens ist also um mehr als eine Größenordnung größer als die von bekannten Verfahren und ermöglicht somit bei gleicher Wasserstoffproduktion eine wesentliche Verkleinerung des hierzu benötigten Reaktors.

**Patentansprüche**

1. Verfahren zur autothermen, katalytischen Dampfreformierung von Kohlenwasserstoffen durch Leiten eines auf eine Vorwärmtemperatur erwärmten Eduktgemisches aus den Kohlenwasserstoffen, Sauerstoff und Wasser oder Wasserdampf Ober einen Katalysator, wobei
das Verfahren einstufig und adiabatisch betrieben wird und der Katalysator auf einem Tragkörper eine Beschichtung aus einer Katalysatormasse aufweist, welche Rhodium in einer Konzentration von 0,1 bis 2 Gew.-%, bezogen auf ihr Gesamtgewicht auf einem oxidischen Trägermaterial aus der Gruppe Aluminiumoxid, Siliciumdioxid, Titandioxid oder Mischoxide hiervon und Zeolithe enthält
und wobei
die Katalysatormasse zusätzlich Platin mit einem Gewichtsverhältnis von Rhodium zu Platin zwischen 20:1 bis 2:1 enthält.

2. Verfahren nach Anspruch 1,
wobei
die Katalysatormasse zusätzlich wenigstens ein Oxid ausgewählt aus der Gruppe Boroxid, Wismutoxid, Galliumoxid, Oxide der Alkalimetalle, Oxide der Erdalkalimetalle, Oxide der Nebengruppenelemente und Oxide der Seltenerdmetalle in einer Konzentration von bis zu 40 Gew.-%, bezogen auf das Gesamtgewicht der Katalysatormasse, enthält.

3. Verfahren nach Anspruch 1,
wobei
als Trägermaterial für Rhodium und gegebenenfalls Platin aktives Aluminiumoxid verwendet wird.

4. Verfahren nach Anspruch 3,

wobei
die Katalysatormasse zusätzlich Ceroxid enthält.

5. Verfahren nach Anspruch 4,
   wobei
   als Tragkörper für die katalytische Beschichtung monolithische Wabenkörper aus Keramik oder Metall, offenzellige keramische oder metallische Schaumkörper, Metallbleche oder unregelmäßig geformte Bauteile verwendet werden.

6. Verfahren nach Anspruch 5,
   wobei
   als Kohlenwasserstoffe aliphatische oder aromatische Kohlenwasserstoffe oder Kohlenwasserstoffgemische wie Benzin oder Dieselöl eingesetzt werden.

7. Verfahren nach Anspruch 6,
   wobei die Luftzahl λ des Eduktgemisches und seine Vorwärmtemperatur so gewählt werden, dass sich am Ausgang des Katalysators eine Temperatur zwischen 600 und 900° C einstellt.

8. Verfahren nach Anspruch 7,
   wobei
   Im Eduktgemisch ein Verhältnis S/C zwischen 0,7 und 4 eingestellt wird.


**Claims**

1. A process for autothermal catalytic steam reforming of hydrocarbons by passing a reactant mixture of hydrocarbons, oxygen and water or water vapour, heated to a preheating temperature, over a catalyst,
   wherein
   the process is operated in one step and adiabatically and the catalyst has a coating of a catalyst material on a support structure containing rhodium in a concentration of 0.1 to 2 wt.%, with respect to its total weight, on an oxidic support material from the group consisting of aluminium oxide, silicon dioxide, titanium dioxide or mixed oxides thereof and zeolites,
   and wherein
   the catalyst material also contains platinum in a ratio by weight of rhodium to platinum of between 20:1 and 2:1.

2. A process according to Claim 1,
   wherein
   the catalyst material also contains at least one oxide chosen from the group consisting of boron oxide, bismuth oxide, gallium oxide, oxides of the alkali metals, oxides of the alkaline earth metals, oxides of the subgroup elements and oxides of the rare earth metals in a concentration of up to 40 wt.%, with respect to the total weight of catalyst material.

3. A process according to Claim 1,
   wherein
   active aluminium oxide is used as support material for rhodium and optionally platinum.

4. A process according to Claim 3,
   wherein
   the catalyst material also contains cerium oxide.

5. A process according to Claim 4,
   wherein
   monolithic honeycomb structures made from ceramic or metal, open-cell ceramic or metal foam structures, metal sheeting or irregularly shaped components are used as support structures for the catalytic coating.

6. A process according to Claim 5,
   wherein
   aliphatic or aromatic hydrocarbons or hydrocarbon mixtures such as petrol or diesel oil are used as hydrocarbons.

**7.** A process according to Claim 6,

wherein

the air-index λ of the reactant mixture and its preheating temperature are chosen so that a temperature between 600 and 900°C is achieved at the outlet of the catalyst.

**8.** A process according to Claim 7,

wherein

a S/C ratio between 0.7 and 4 is set in the reactant mixture.

**Revendications**

**1.** Procédé de reformage à la vapeur catalytique autotherme d'hydrocarbures en faisant passer un mélange d'éduits, constitué d'hydrocarbures, d'oxygène et d'eau ou de vapeur d'eau, chauffé à une température de préchauffage, au-dessus d'un catalyseur,
le procédé comportant une seule étape et étant adiabatique et le catalyseur présentant, sur un corps porteur, un revêtement constitué d'une masse de catalyseur qui contient du rhodium dans une concentration de 0,1 à 2 % en poids, par rapport à son poids total, sur un matériau support oxydique du groupe constitué d'oxyde d'aluminium, de dioxyde de silicium, de dioxyde de titane ou d'oxydes mixtes de ceux-ci et de zéolithes, et selon lequel la masse de catalyseur contient en complément du platine dans un rapport pondéral de rhodium au platine compris entre 20: 1 1 et 2:1.

**2.** Procédé selon la revendication 1,

selon lequel

la masse de catalyseur contient en complément au moins un oxyde choisi dans le groupe constitué d'oxyde de bore, d'oxyde de bismuth, d'oxyde de gallium, d'oxydes des métaux alcalins, d'oxydes des métaux alcalino-terreux, d'oxydes des éléments de groupes annexes et d'oxydes de métaux de terres rares, dans une concentration pouvant aller jusqu'à 40 % en poids par rapport au poids total de la masse de catalyseur.

**3.** Procédé selon la revendication 1,

selon lequel

comme matériau support pour le rhodium et éventuellement le platine, on utilise un oxyde d'aluminium actif.

**4.** Procédé selon la revendication 3,

selon lequel

la masse de catalyseur contient en plus de l'oxyde de cérium.

**5.** Procédé selon la revendication 4,

selon lequel

comme corps porteur du revêtement catalytique, on utilise des corps alvéolés monolithiques en céramique ou en métal, des corps moussés céramiques ou métalliques à cellules ouvertes, des tôles métalliques où des composants ayant des formes irrégulières.

**6.** Procédé selon la revendication 5,

selon lequel

comme hydrocarbures, on utilise des hydrocarbures aliphatiques ou aromatiques ou bien des mélanges d'hydrocarbures comme l'essence ou le diesel.

**7.** Procédé selon la revendication 6,

selon lequel

on choisit l'indice d'air λ du mélange d'éduits et sa température du préchauffage pour établir une température comprise entre 600°C et 900°C à la sortie du catalyseur.

**8.** Procédé selon la revendication 7,

selon lequel

on règle dans le mélange d'éduits un rapport S/C compris entre 0,7 et 4.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4415484 A
- WO 9855227 A
- WO 9948805 A
- DE 19727841 A1